(19) Europäisches Patentamt / European Patent Office / Office européen des brevets

(11) **EP 1 742 066 B1**

(12) **FASCICULE DE BREVET EUROPEEN**

(45) Date de publication et mention
de la délivrance du brevet:
**04.11.2009 Bulletin 2009/45**

(51) Int Cl.:
*G01P 3/48* *(2006.01)*     *G01M 15/04* *(2006.01)*

(21) Numéro de dépôt: **06300758.7**

(22) Date de dépôt: **05.07.2006**

(54) **Procédé d'estimation du régime de rotation d'un moteur de véhicule automobile.**

Verfahren zur Ermittlung der Drehzahl des Motors eines Kraftfahrzeuges

Method for estimating the rotation speed of a vehicle engine

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.07.2005 FR 0507223**

(43) Date de publication de la demande:
**10.01.2007 Bulletin 2007/02**

(73) Titulaire: **PEUGEOT CITROËN AUTOMOBILES S.A.**
**78140 Velizy Villacoublay (FR)**

(72) Inventeurs:
• **Bouygues, Isabelle**
**78220 Viroflay (FR)**
• **Ragot, Franck**
**75009, Paris (FR)**

(74) Mandataire: **Ménès, Catherine**
**Peugeot Citroën Automobiles SA**
**PI (LG081)**
**18, rue des Fauvelles**
**92250 La Garenne-Colombes (FR)**

(56) Documents cités:
EP-A1- 0 780 689     EP-A1- 0 895 089
DE-A1- 10 255 578     DE-A1- 19 713 182
GB-A- 1 089 300     GB-A- 2 294 769

**Description**

La présente invention concerne un procédé et un système d'estimation du régime de rotation d'un moteur à combustion interne de véhicule automobile.

Classiquement, le régime du moteur est calculé en fonction de mesures délivrées par un ou plusieurs capteurs dédiés à cette application et agencés au niveau de l'arbre moteur, comme des capteurs à effet Hall ou des encodeurs optiques par exemple. De manière typique, les capteurs sont intrusifs, nécessitent d'être calibrés et sont onéreux.

EP-A-0 895 089 présente un procédé d'estimation du régime de rotation d'un moteur à combustion interne d'un véhicule à partir du courant et de la tension de la batterie du véhicule.

Le but de la présente invention est de résoudre les problèmes mentionnés en proposant un procédé et un système d'estimation du régime d'un moteur à combustion interne qui ne comporte pas de capteurs spécifiquement dédiés à cette estimation.

A cet effet, l'invention a pour objet un procédé d'estimation du régime de rotation d'un moteur à combustion interne de véhicule automobile, raccordé à un réseau électrique du véhicule, caractérisé en ce qu'il comprend les étapes :

- d'acquisition d'au moins deux signaux du réseau électrique ;
- de détermination de la fréquence d'un harmonique commun aux transformées de Fourier des au moins deux signaux acquis, représentatif du régime du moteur ; et
- d'estimation du régime du moteur en fonction de ladite fréquence déterminée.

Suivant des modes particuliers de réalisation, le procédé comporte une ou plusieurs des caractéristiques suivantes :

- le réseau électrique comprend un alternateur et des moyens de stockage d'énergie électrique, et l'étape d'acquisition comprend une étape d'acquisition de deux au moins parmi le courant et la tension de l'alternateur, le courant et la tension des moyens de stockage d'énergie électrique, et le courant et la tension d'organes fonctionnels consommateurs d'énergie électrique ;
- l'étape d'estimation du régime du moteur consiste à estimer celui-ci selon la relation :

$$RPM = (60/2)^*f$$

où RPM est le régime du moteur exprimé en tours par minute et f est la fréquence de l'harmonique représentatif de celui-ci exprimée en Hertz.

L'invention sera mieux comprise à la lecture de la description qui va suivre, donnée uniquement à titre d'exemple, et faite en relation avec les dessins annexés dans lesquels :

- la figure 1 est une vue schématique d'un système selon l'invention associé à un réseau électrique de véhicule automobile ; et
- la figure 2 est un organigramme du fonctionnement du système de la figure 1.

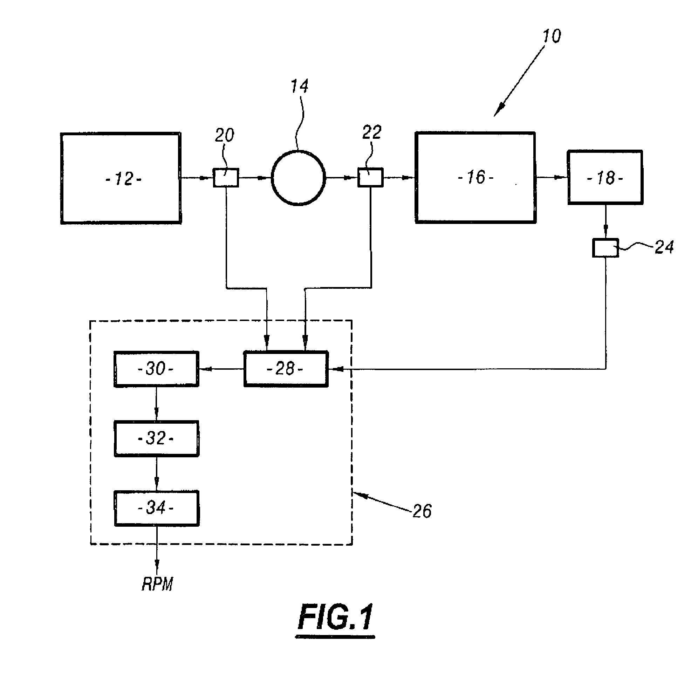

Sur la figure 1, un réseau électrique de véhicule automobile est illustré sous la référence générale 10.

Ce réseau 10 est raccordé à un moteur 12 à combustion interne de véhicule automobile, c'est-à-dire propre à convertir de l'énergie provenant de la combustion d'un carburant en un mouvement mécanique au moyen d'un vilebrequin (non représenté), comme cela est connu en soi.

Le réseau 10 comprend un alternateur 14 entraîné en rotation par le moteur 12 et délivrant de l'énergie électrique à une batterie d'accumulateurs 16 pour la charge de cette dernière.

La batterie 16 est par ailleurs connectée à des organes fonctionnels 18 du véhicule comme le groupe électro-pompe, le groupe moteur-ventilateur, l'éclairage, etc, pour leur alimentation en énergie électrique.

Un système d'estimation du régime de rotation du moteur 12 est connecté du réseau électrique 10 et comprend des capteurs 20, 22, 24 propres à mesurer des signaux électriques, tels que des courants ou des tensions, en différents points du réseau 10.

Par exemple, le système selon l'invention comprend un capteur 20 du courant circulant entre l'alternateur 14 et la batterie 16, un capteur 22 du courant échangé par la batterie avec son environnement agencé entre la batterie 16 et les organes fonctionnels 18, et un capteur 24 de courant circulant dans un ou plusieurs organes fonctionnels 18, par exemple le groupe électro-pompe et le groupe moto-ventilateur. En variante, la tension aux bornes d'un ou plusieurs des organes susmentionnés est mesurée à la place ou en plus du courant circulant dans ceux-ci.

Le système selon l'invention est propre à estimer à partir de caractéristiques des signaux électriques mesurés, le régime du moteur 12.

Plus particulièrement, le système exploite le fait que la rotation du vilebrequin est acyclique et apparaît en tant qu'harmonique dans chacun des signaux électriques mesurés.

Le système comprend à cet effet une unité 26 de traitement de signal recevant les signaux acquis au moyen des différents capteurs 20, 22, 24.

Les signaux sont délivrés à un module 28 de calcul de la transformée de Fourier de chacun de ces signaux, par exemple une transformée de Fourier rapide. Le module 28 est raccordé à un module 30 de détermination des harmoniques présents dans chacune des transformées de Fourier calculées par le module 28.

Un module 32 est raccordé au module 30 pour recevoir les harmoniques déterminés pour chacun des signaux mesurés et pour comparer les harmoniques d'un signal à l'autre.

Plus particulièrement, le module 32 est propre à détecter une harmonique commune à l'ensemble des signaux mesurés en comparant les fréquences des harmoniques. Comme cela a été mentionné précédemment, une telle harmonique commune à l'ensemble des signaux mesurés est représentative de la vitesse de rotation du vilebrequin, c'est-à-dire le régime du moteur.

La fréquence de l'harmonique commune est délivrée à un module 34 d'estimation propre à estimer en fonction de celle-ci le régime du moteur selon la relation :

$$RPM = (60/2) * f \quad (1)$$

où *RPM* est le régime du moteur estimé exprimé en tours par minute, et *f* est la fréquence de l'harmonique commune exprimée en Hertz.

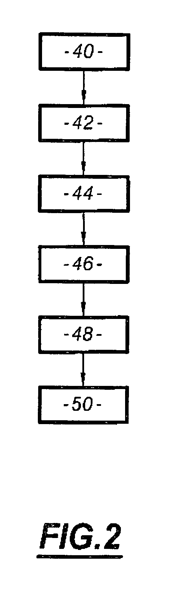

La figure 2 est un organigramme du fonctionnement du système de la figure 1.

Dans une étape 40, les signaux électriques sont mesurés aux différents points du réseau électrique.

Ensuite, en 42, la transformée de Fourier de chacun des signaux est calculée, puis en 44, les harmoniques des transformées de Fourier sont déterminées.

Les fréquences des harmoniques sont comparées dans une étape 46, et l'harmonique commune à chacun des signaux est déterminée en 48.

Le régime moteur est enfin estimé en 50 selon la relation (1).

Il vient d'être décrit un mode de réalisation de l'invention dans lequel plusieurs mesures de signaux électriques sont réalisées afin de déterminer la fréquence de l'harmonique associée au régime moteur.

Ce mode de réalisation est particulièrement adapté pour des régimes de rotation élevés qui nécessitent une telle pluralité de mesures pour déterminer avec précision la fréquence de cette harmonique.

En variante, pour des régimes de rotation bas, c'est-à-dire proches du ralenti, une seule mesure de signal électrique est réalisée, et l'harmonique associée au régime moteur est déterminée à partir de cette unique mesure, par exemple au moyen d'une transformée de Fourier. En effet, pour de tels régimes, cette harmonique présente la plus forte énergie et elle est déterminée comme étant l'harmonique principale de la transformée de Fourier de la mesure.

**Revendications**

**1.** Procédé d'estimation du régime de rotation d'un moteur à combustion interne (12) de véhicule automobile, raccordé à un réseau électrique du véhicule (10), **caractérise en ce qu'**il comprend les étapes :

- d'acquisition (en 44) d'au moins deux signaux du réseau électrique (10) ;
- de détermination (en 44, 46, 48) de la fréquence d'un harmonique commun aux transformées de Fourier des au moins deux signaux acquis, représentatif du régime moteur du signal acquis représentatif du régime du moteur ; et
- d'estimation (en 50) du régime du moteur en fonction de ladite fréquence déterminée.

**2.** Procédé selon la revendication 1, **caractérisé en ce que** le réseau électrique (10) comprend un alternateur (14) et des moyens de stockage d'énergie électrique (16), et **en ce que** l'étape d'acquisition (en 44) comprend une étape d'acquisition de deux au moins parmi le courant et la tension de l'alternateur (14), le courant et la tension des moyens de stockage d'énergie électrique (16), et le courant et la tension d'organes fonctionnels consommateurs d'énergie électrique.

**3.** Procédé selon l'une quelconque des revendications précédentes, **caractérisé en ce que** l'étape (50) d'estimation du régime du moteur consiste à estimer celui-ci selon la relation : RPM = (60/2)*f où RPM est le régime du moteur exprime en tours par minute et f est la fréquence de l'harmonique représentatif de celui-ci exprimée en Hertz.

**Claims**

**1.** Method of estimating the rotational speed of a motor vehicle internal combustion engine (12) connected to an electrical network of the vehicle (10), **characterized in that** it comprises the steps:

- of acquiring (at 44) at least two signals from the electrical network (10);
- of determining (at 44, 46, 48) the frequency of a harmonic common to the Fourier transforms of the at least two signals acquired, representative of the engine speed; and
- of estimating (at 50) the engine speed as a function of the said determined frequency.

**2.** Method according to Claim 1, **characterized in that** the electrical network (10) comprises an alternator (14) and means of storing electrical energy (16) and **in that** the acquisition step (at 44) comprises a step of acquiring at least two of the following: the current and voltage of the alternator (14), the current and voltage of the electrical energy storage means (16), and the current and voltage of electrical energy consuming functional components.

3. Method according to either one of the preceding claims, **characterized in that** step (50) of estimating the engine speed consists in estimating the latter using the relationship: RPM = (60/2) $\times$ f where RPM is the engine speed expressed in revolutions per minute and f is the frequency of the harmonic representative of that speed and expressed in Hertz.

## Patentansprüche

1. Verfahren zur Schätzung der Drehzahl eines Kraftfahrzeug-Verbrennungsmotors (12), der mit einem Stromnetz des Fahrzeugs (10) verbunden ist, **dadurch gekennzeichnet, dass** es die folgenden Schritte aufweist:

> • Erfassung (in 44) von mindestens zwei Signalen des Stromnetzes (10);
> • Bestimmung (in 44, 46, 48) der Frequenz einer den Fourier-Transformierten der mindestens zwei erfassten Signale gemeinsamen Harmonischen, die für die Motordrehzahl repräsentativ ist; und
> • Schätzung (in 50) der Drehzahl des Motors in Abhängigkeit von der bestimmten Frequenz.

2. Verfahren nach Anspruch 1, **dadurch gekennzeichnet, dass** das Stromnetz (10) einen Wechselstromgenerator (14) und Einrichtungen zum Speichern elektrischer Energie (16) enthält, und dass der Erfassungsschritt (in 44) einen Schritt der Erfassung von mindestens zwei von dem Strom und der Spannung des Wechselstromgenerators (14), dem Strom und der Spannung der Einrichtungen zum Speichern elektrischer Energie (16), und dem Strom und der Spannung von elektrische Energie verbrauchenden Funktionsorganen enthält.

3. Verfahren nach einem der vorhergehenden Ansprüche, **dadurch gekennzeichnet, dass** der Schritt (50) der Schätzung der Drehzahl des Motors darin besteht, diese gemäß der Beziehung: RPM = (60/2)*f zu schätzen, wobei RPM die Drehzahl des Motors, ausgedrückt in Drehungen pro Minute, und f die Frequenz der für diese repräsentativen Harmonischen, ausgedrückt in Hertz, ist.

*FIG.1*

**FIG.2**

**EP 1 742 066 B1**

**RÉFÉRENCES CITÉES DANS LA DESCRIPTION**

**Documents brevets cités dans la description**

- EP 0895089 A